# EUROPEAN PATENT APPLICATION

(11) **EP 0 622 960 A2**
(43) Date of publication of application: **02.11.1994**
(21) Application number: 94106450.3
(22) Date of filing: 26.04.1994
(51) Int. Cl.: H04N 7/137, H04N 5/14, G06T 7/20, H04N 7/26, H04N 7/36, H04N 7/015

(54) **Motion detection circuit**

(30) Priority: 30.04.1993 JP 104320/93; 30.04.1993 JP 104321/93
(71) Applicant: MATSUSHITA ELECTRIC INDUSTRIAL CO., LTD., Kadoma-shi, Osaka-fu, 571 (JP)
(72) Inventor: Sokawa, Kenta, Hirakata-shi, Osaka (JP); Hamada, Masanori, Kadoma-shi, Osaka (JP)
(74) Representative: Eisenführ, Speiser & Partner

(57) **Abstract**

A motion detection circuit in which the contours in the current frame of the image and two frames before are detected by two discrete contour detection circuits, the signal detected by a one frame period difference detection circuit is band-limited by a low pass filter, and then converted to a one frame motion signal according to the contour signal of the current frame, the signal detected by the two frame period difference detection circuit is similarly converted to a two frame period motion signal according to the contour signal of the current frame, an output control circuit then detects an area corresponding to the unnecessary part of the motion detection area due to the two frame period motion signal from the contour signals of the current frame and two frames before; this detection signal cuts off the two frame motion signal in meaningful areas, and whichever of the one frame motion signal and the output-controlled two frame motion signal is greater is then selected by the maximum value selector and output as the motion signal.

## Description

### BACKGROUND OF THE INVENTION

### 1. Field of the invention

The present invention relates to a motion detection circuit for detection subject motion in a video signal.

### 2. Description of the prior art

Video signal processing devices using a motion detection circuit include motion adaptive YC separators, which are used to separate NTSC and other composite video signals into luminance signal (hereafter "Y signal") and chrominance signal (hereafter "C signal") components, and sub-sampling band compression-type decoders (e.g., the MUSE (Multiple Sub-Nyquist Sampling Encoding) decoder used in the Japanese HDTV transmission system).

In video signal processing devices such as these, image movement is detected by the motion detection circuit, and still and moving image processing results are mixed pixel by pixel based on the detection result to obtain the output signal.

One motion detection circuit is described in Japanese patent laid-open publication SHO 63-169195 and in USP 4,884,136.

This motion detection circuit detects motion based on the low band frequency component of the one frame period difference signal of the image and the full band frequency component of the two frame period difference signal. This method is used for the following reasons.

When the video signal is an NTSC signal, the C signal is frequency multiplexed to the high band of the Y signal. As a result, the one frame period difference signal has a meaningful value even with still images. The low band frequency component must be used as the one frame period difference signal to avoid this effect of the C signal. When the video signal is a MUSE signal, the one flame period difference signal still has a meaningful value even with still images because the sub-sampling aliased component occurs at high frequencies. The low band frequency component must therefore be used as the one frame period difference signal to avoid the effect of the aliased component. Because detection of motion in the high band frequency component is thus not possible using the one frame period difference signal, a two frame period difference signal is also used. Motion in the full signal band is possible using the two frame period difference signal because both the NTSC and MUSE formats use a sequence of two frames to form a single image.

With the conventional motion detection circuit, however, motion signals are detected outside the targeted motion area as a result of time-space expansion of the motion detection area from use of the two frame period difference signal, and spatial expansion of the motion detection area caused by the band limiting circuit (e.g., a low pass filter) used to obtain the low band frequency component of the one frame period difference signal. When signal processing is based on a motion signal expanded to much unnecessary areas, image areas that should be processed as static images are processed as moving images, resulting in deteriorated image quality. With motion adaptive YC separators, reduced resolution, cross color, and cross luminance interference occur. With the MUSE decoder, reduced resolution and aliased interference occur.

### SUMMARY OF THE INVENTION

Therefore, an object of the present invention is to provide a lotion detection circuit for preventing unnecessary expansion of the motion detection area as a result of using a two frame period difference signal or band limiting means.

To achieve this object, a motion detection circuit according to the present invention comprises a one frame period difference detection means for detecting the one frame period difference in the video signal; an N-frame period difference detection means for detecting the difference between N frames; a first contour detection means for detecting contours in the current frame; a second contour detection means for detecting contours in the frame N frames before the current frame; a band limiting means for limiting the high band frequency component of the output signal from the one frame period difference detection means; a first conversion means for converting the output signal from the band limiting means to a first motion signal according to the output signal from the first contour detection means; a second conversion means for converting the output signal from the N-frame period difference detection means to a second motion signal according to the output signal from the first contour detection means; a motion signal control means for controlling output of the second motion signal according to the output signals from the first and second contour detection means; and an output means for outputting the motion signal based on he first motion signal and the output signal of the motion signal control means.

In a motion detection circuit thus comprised, unnecessary expansion of the motion detection area due to the two frame motion signal can be eliminated by defining N as a value of two.

Alternatively, a motion detection circuit according to another embodiment of the present invention comprises a one frame period difference detection means for detecting the one frame period difference in the video signal; an N-frame period difference detection means for detecting the difference between N frames; a first contour detection means for detecting contours in the current frame; a second contour detection means for detecting contours in the frame N frames before the current frame; a first band limiting means for limiting the high band frequency component of the output signal from the one frame period difference detection means; a second band limiting means for limiting the high band frequency component of the output signal from the one frame period difference detection means; a first conversion means for converting the output signal from the first band limiting means to a first motion signal according to the output signal from the first contour detection means; a second conversion means for converting the output signal from the second band limiting means to a second motion signal according to the output signal from the first contour detection means; a third conversion means for converting the absolute value of the output signal from the N-frame period difference detection means to a third motion signal according to the output signal from the first contour detection means; a motion signal control means for controlling output of the third motion signal according to the output signals from the first and second contour detection means; and an output means for outputting the motion signal based on the first and second motion signals and the output signal of the motion signal control means.

In a motion detection circuit thus comprised, unnecessary expansion of the motion detection area due to the two frame motion signal, and unnecessary expansion of the motion detection area due to the band limiting means processing the one frame motion signal can both be eliminated by defining N as a value of two.

### BRIEF DESCRIPTION OF THE DRAWINGS

The present invention will become more fully understood from the detailed description given below and the accompanying diagrams wherein:
Fig. 1 is a block diagram of a motion detection circuit according to the preferred embodiment of the invention,
Fig. 2 is a block diagram of one embodiment of the evaluation circuit shown in Fig. 1,
Fig. 3 is a block diagram of one embodiment of the cut-off circuit shown in Fig. 1,
Fig. 4 shows the wave form diagrams used to describe the operation of the motion detection circuit according to the preferred embodiment of the invention,
Fig. 5 is a block diagram of another embodiment of the motion signal controller shown in Fig. 5,
Fig. 6 is a block diagram of the expansion circuit shown in Fig. 5,
Fig. 7 is a block diagram of another embodiment of the motion signal controller shown in Fig. 5,
Fig. 8 is a block diagram of the isolated point removal circuit shown in Fig. 7,
Fig. 9 is a block diagram of a motion detection circuit according to an alternative embodiment of the invention,
and Fig. 10 is a wave form diagram used to describe the operation of the motion detection circuit according to the alternative embodiment.

### DETAILED DESCRIPTION OF THE PREFERRED EMBODIMENTS

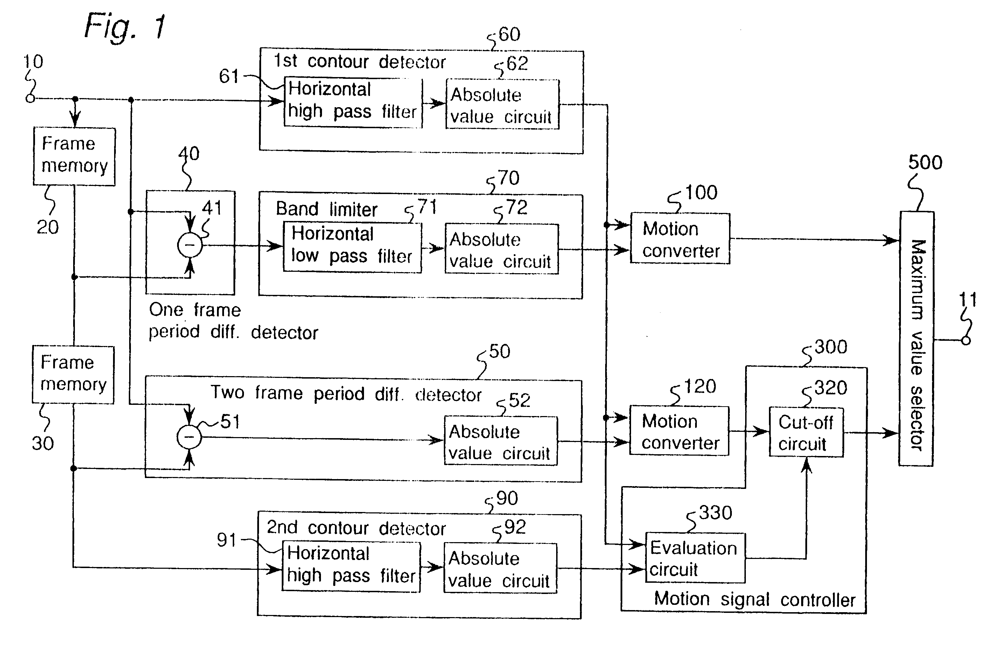

Fig. 1 is a block diagram of a motion detection circuit according to the preferred embodiment of the invention.

Referring to Fig. 1, the video signal applied to input terminal 10 is supplied to the first contour detector 60, the one frame period difference detector 40, the two frame period difference detector 50, and the frame memory 20. The first contour detector 60 detects the contours of the video signal subject in the current frame by means of a high pass filter 61. The absolute value of the detected contour signal is obtained by the absolute value circuit 62, and the absolute value is supplied to the one frame motion converter 100, the two frame motion converter 120, and the motion signal controller 300.

The output signal from the frame memory 20 is also supplied to the one frame period difference detector 40, which is a subtracter 41. As a result, the one frame period difference signal is obtained as the result of a subtraction operation between the one frame delayed signal from the frame memory 20 and the present frame signal from the input terminal 10. The one frame period difference signal is supplied to the band limiter 70.

The band limiter 70 removes the high band frequency component contained in the one frame period difference signal using a low pass filter 71 in the horizontal direction. The absolute value of the one frame period difference signal from which the high band frequency component has been removed is then obtained by absolute value circuit 72, and the result is supplied to the one frame motion converter 100. The one frame motion converter 100 may be, for example, a divider, which obtains the one frame motion signal by dividing the absolute value of the one frame period difference signal by the absolute value of the contour signal of the current frame. The one frame motion signal is then supplied to one input terminal of the maximum value selector 500.

The output signal of the frame memory 20 is also supplied to the other frame memory 30. As a result, the output signal from the frame memory 30 is the signal from two frames before the current video input signal. This signal is supplied to the two frame period difference detector 50 and the second contour detector 90. The two frame period difference detector 50 obtains the two frame period difference signal as the output from subtracter 51. The absolute value of the two frame period difference signal is then obtained by absolute value circuit 52, and supplied to the two frame motion converter 120. The second contour detector 90 is constructed identically to the first contour detector 60, and the contours of the image two frames before are detected. This contour signal from two frames before is then supplied to the motion signal controller 300.

Similarly to the one frame motion converter 100, the two frame motion converter 120 is, for example, a divider for obtaining the two frame motion signal by dividing the absolute value of the two frame period difference signal by the absolute value of the contour signal of the current frame. The two frame motion signal is then supplied to the motion signal controller 300.

In the motion signal controller 300, the absolute value of the current frame contour signal and the absolute value of the contour signal from two frames before are supplied to the evaluation circuit 330.

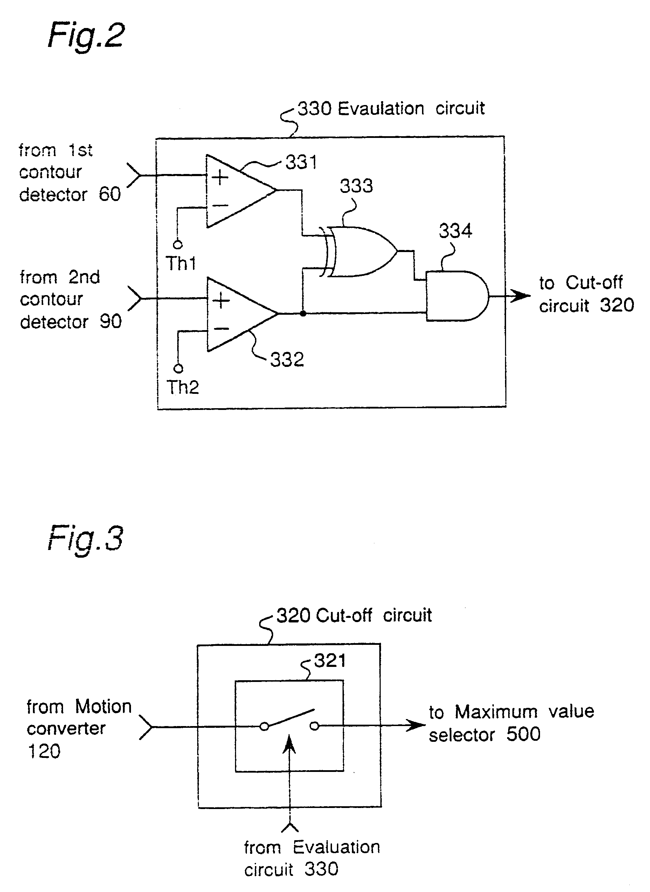

A block diagram of the evaluation circuit 330 is shown in Fig. 2. The absolute value of the current frame contour signal is compared with a predetermined threshold value Th1 by the first comparator 331. This comparator 331 outputs a logical HIGH if the absolute value is greater than the threshold value, and a logical LOW if the absolute value is less than the threshold value. This output logic value is input to one input terminal of the exclusive OR (XOR) circuit 333. The absolute value of the contour signal from two frames before is also compared with a predetermined threshold value Th2 by the second comparator 332, which similarly outputs a logical HIGH if the absolute value is greater than the threshold value, and a logical LOW if the absolute value is less than the threshold value. The output value of this comparator 332 is input to the other input terminal of the XOR 333, and to the AND circuit 334. The output signal of the XOR 333 is input to the other input terminal of the AND circuit 334, and the output signal of the AND circuit 334 is output as the evaluation result.

With this circuit configuration, the logical output value of the XOR 333 is HIGH only in areas in which either the contour of the current frame or the contour of the frame two frames before exists. As a result, the output of the AND circuit 334 is HIGH only in the area in which the contour of the frame two frames before exists.

The evaluation result output from the evaluation circuit 330 is then used for controlling the cut-off circuit 320. This cut-off circuit 320 may be a simple switching circuit 321 as shown in Fig. 3; when the cut-off circuit 320 output is a logical HIGH, the input two frame motion signal is cut off. If the evaluation result is LOW, the two frame motion signal is output through the cut-off circuit 320. The two frame period difference signal is therefore output-controlled according to the evaluation results and supplied to the other input terminal of the maximum value selector 500.

The maximum value selector 500 compares the level of the input one frame period difference signal with the level of the two frame period difference signal, and outputs the motion signal with the higher signal level as a result of this comparison. The motion signal is output from output terminal 11.

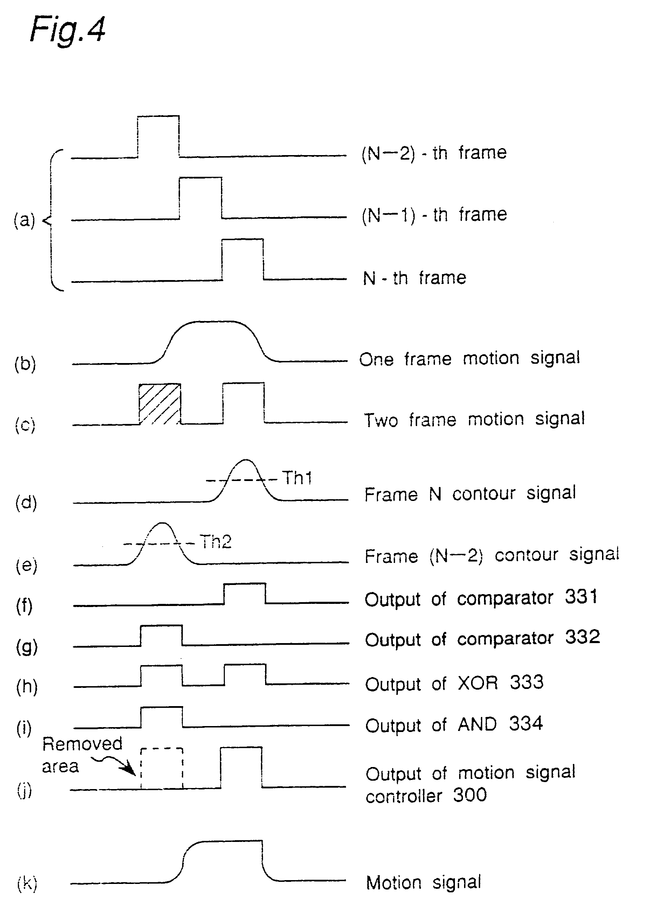

The operation of the motion detection circuit according to the present invention is described further below with reference to Fig. 4. It is assumed that the signal shown in Fig. 4 (a) is input to the motion detection circuit. The waves shown in Fig. 4 (a) are for the adjacent frames N, (N-1), and (N-2). The wave shown in Fig. 4 (b) is thus obtained as the one frame motion signal, and the two frame motion signal prior to output control is shown in Fig. 4 (c).

In Fig. 4 (c) the shaded area is the unnecessary motion detection area in the two frame motion signal (the area expanded unnecessarily in time-domain). The frame N contour signal is shown in Fig. 4 (d), and the frame (N-2) contour signal is shown in Fig. 4 (e). The output signals of the comparators 331, 332 in the evaluation circuit 330 obtained for these input signals are shown in Figs. 4 (f) and (g), respectively. The XOR 333 output signal is thus as shown in Fig. 4 (h), and the output signal from the evaluation circuit 330 is shown in Fig. 4 (i).

Specifically, the area of which the output signal of the evaluation circuit 330 is HIGH corresponds to the unnecessary part of the motion detection area in the two frame motion signal. If the two frame motion signal is output controlled using this evaluation signal, the signal shown in Fig. 4 (j) results, and unnecessary areas are removed. The maximum value selector 500 selects and outputs the higher of the Fig. 4 (b) and Fig. 4 (j) signals as the motion signal shown in Fig. 4 (k).

With the motion detection circuit of the invention, it is thererfore possible to eliminate unnecessary expansion of the motion detection area due to the two frame motion signal. As a result, NTSC motion adaptive YC separators or MUSE decoders using the motion detection circuit of the invention can improve image deterioration caused by moving image processing of still images.

It is to be noted that while a low pass filter is used in the horizontal direction as the band limiting means of the above embodiment, a low pass filter for the vertical direction can also be connected in series.

In addition, the motion detection circuit of the preferred embodiment can be adapted to the PAL format used in Europe by replacing the frame memory 30 with, for example, a memory device delaying the signal for three signal periods (a three frame memory). The PAL format uses a four frame sequence, and by using a three frame memory, it is possible to detect motion using the low band frequency component of the one frame period difference signal and the four frame period difference signal, and to prevent unnecessary expansion of the motion detection area caused by the four frame motion signal.

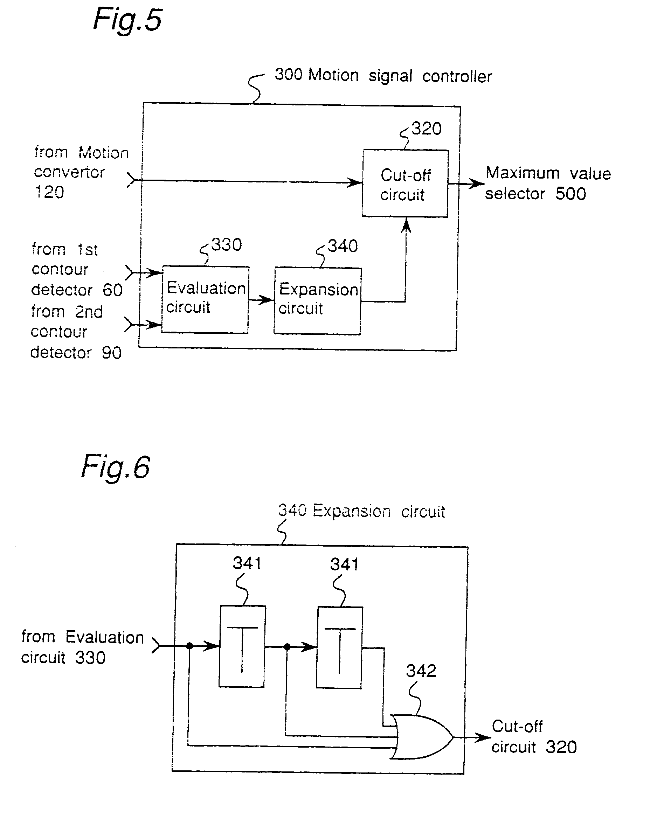

Fig. 5 is a block diagram of an alternative embodiment of the motion signal controller 300. This circuit differs from that shown in Fig. 1 in that the output signal of the evaluation circuit 330 is passed through an expansion circuit 340 before being supplied to the cut-off circuit 320.

As shown in Fig. 6, this expansion circuit 340 comprises two single pixel delays 341 and an OR circuit 342. With this configuration, a logical sum operation is performed on the evaluation results from the target pixel and the one pixel on each side in the horizontal direction, thereby enlarging the area for which a HIGH evaluation result is returned. It is therefore possible to even more effectively eliminate unnecessary expansion of the motion detection area caused by the two frame motion signal.

It is to be noted that while the expansion circuit 340 performs a logical sum on three horizontal pixels, it shall not be so limited and can operate on a greater number of plural pixels.

In addition, a 1-line delay can be used in place of the single pixel delay to obtain the logical sum of pixels in the vertical direction. In addition, combinations of plural horizontal and vertical logical sum operations can also be used.

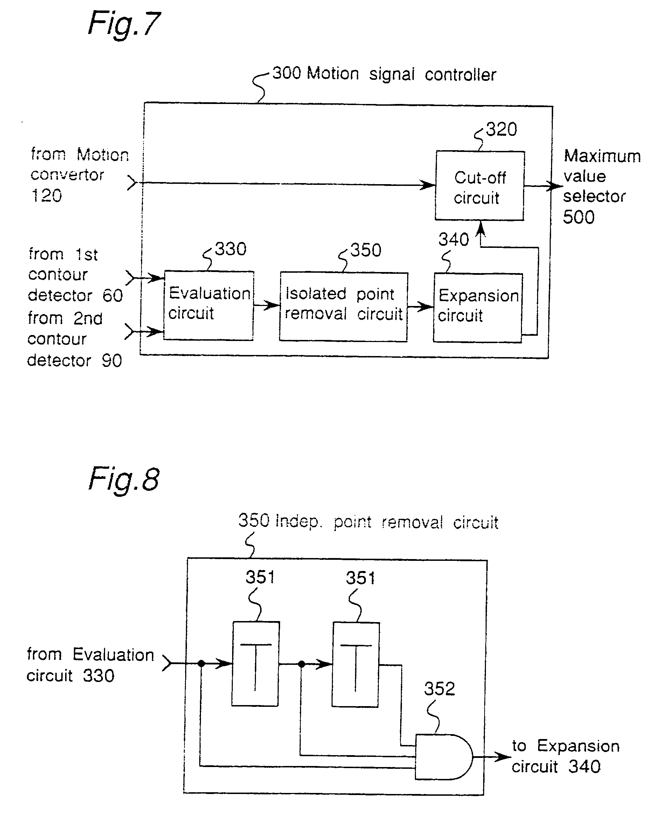

Another embodiment of the motion signal controller 300 is shown in Fig. 7. This circuit differs from that shown in Fig. 5 in that an isolated point removal circuit 350 is inserted between the evaluation circuit 330 and the expansion circuit 340.

As shown in Fig. 8, this isolated point removal circuit 350 comprises two single pixel delays 351 and an AND circuit 352. With this configuration, a logical product operation is performed on the evaluation results from the target pixel and the one pixel on each side in the horizontal direction, and a HIGH output is therefore only obtained from the AND circuit 352 when all three inputs are also HIGH. False detection signals occurring independently due to noise are therefore removed, and erroneous elimination of valid motion detection areas in the two frame motion signal can be prevented.

It is to be noted that while the isolated point removal circuit 350 performs a logical product operation on three horizontal pixels, it shall not be so limited and can operate on a greater number of plural pixels in a two dimensional area including both horizontal and vertical pixels.

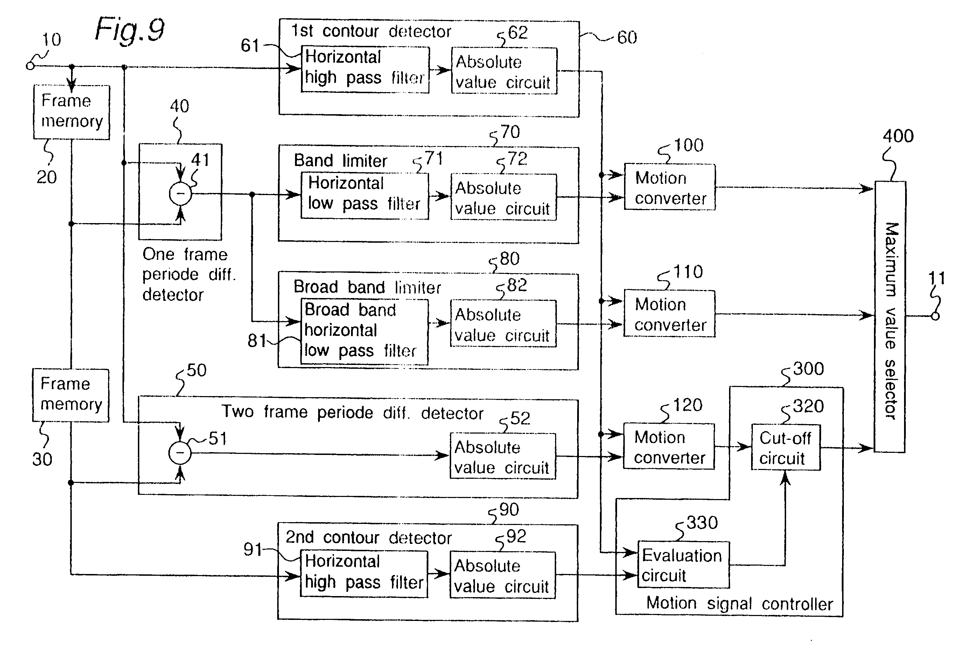

Fig. 9 is a block diagram of a motion detection circuit according to an alternative embodiment of the invention. This embodiment differs from that shown in Fig. 1 in that the output signal of the one frame period difference detector 40 is supplied to a broad band limiter 80; the output signal of the broad band limiter 80 and the output signal of the first contour detector 60 are supplied to a broad band frame motion converter 110; the maximum value selector 500 is replaced by a median value selector 400; and the output signals of the one frame motion converter 100, broad band frame motion converter 110, and motion signal controller 300 are supplied to the median value selector 400. This embodiment is otherwise configured similarly to the first embodiment, and the operation of corresponding parts is also identical.

Referring to Fig. 9, the broad band limiter 80 passes and limits the one frame period difference signal in a broad band, i.e., the band pass characteristic of the horizontal direction low pass filter 81 is wider than that of the low pass filter 71 in the other band limiter 70. The absolute value of the broad band one frame period difference signal band limited by the horizontal direction low pass filter 81 is obtained by absolute value converter 82, and the result is supplied to the broad band frame motion converter 110.

The broad band frame motion converter 110 is identical to the one frame motion converter 100, and the absolute value of the broad band one frame period difference signal is divided by the absolute value of the current frame contour signal to obtain the broad band one frame motion signal. To help avoid confusion in the following description, the one frame motion signal output from the one frame motion converter 100 is referred to as the narrow band one frame motion signal.

The broad band one frame motion signal is supplied directly to the median value selector 400. The median value selector 400 compares the signal levels of the narrow band one frame motion signal, the broad band one frame motion signal, and the two frame motion signal, and outputs the signal with the median value as the motion signal from output terminal 11.

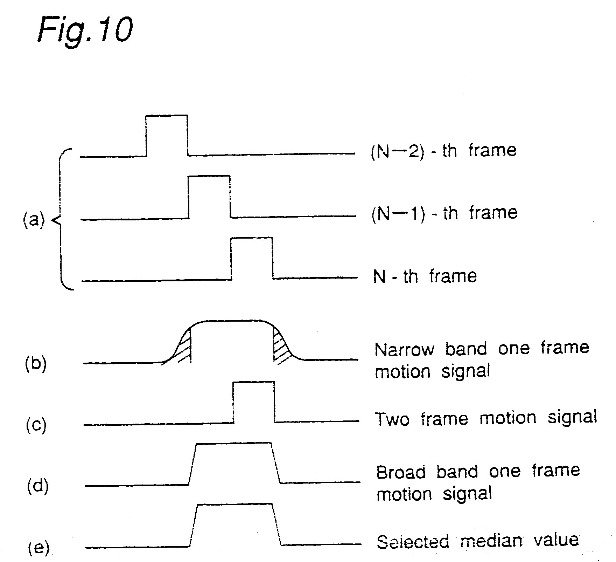

Assume, for example, that the signals shown in Fig. 10 (a) are input to the motion detection circuit of the present embodiment. The waves shown in Fig. 10 (a) are for the adjacent frames N, (N-1), and (N-2). The wave shown in Fig. 10 (b) is thus obtained as the narrow band one frame motion signal. The shaded area in Fig. 10 (b) shows the unnecessary horizontal expansion of the motion detection area due to the narrow band characteristic low pass filter. Unnecessary motion detection areas are removed from the two frame motion signal, obtaining the signal shown in Fig. 10 (c). Operation of the motion detection circuit to this point is the same as that in the first embodiment above. The broad band one frame motion signal is as shown in Fig. 10 (d). Because the band width of the broad band one frame motion signal is greater than the band width of the narrow band one frame motion signal, the broad band one frame motion signal contains a large high band frequency component and minimal unnecessary expansion of the motion detection area in the horizontal direction. As a result, the output signal of the median value selector 400 compares the signals in Figs. 10 (b), (c), and (d), and selects and outputs the median signal, resulting in the output signal shown in Fig. 10 (e). Note that unnecessary expansion of the motion detection area due to the narrow band one frame motion signal is removed from the output motion signal.

With the motion detection circuit of this embodiment, it is therefore possible to eliminate unnecessary expansion of the motion detection area due to the two frame motion signal, and to eliminate unnecessary expansion of the motion detection area in the horizontal direction due to the narrow band one frame motion signal. As a result, NTSC motion adaptive YC separators or MUSE decoders using the motion detection circuit of the invention can significantly improve image deterioration caused by moving image processing of still images.

Note that the motion signal controllers shown in Figs. 5 and 7 can also be used as the motion signal controller 300 shown in Fig. 9.

In addition, the horizontal low pass filter 81 of the broad band limiter 80 can be eliminated and band limiting not performed. A meaningful value will be detected in the broad band one frame motion signal even in still image areas in this case, but will not be output as the median value because the narrow band one frame motion signal and the two frame motion signal are not also detected. False detection in still image areas will thus not occur.

In addition, the motion detection circuit of this embodiment can be adapted to the PAL format used in Europe by replacing the frame memory 30 with, for example, a three frame memory as was previously described above.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A motion detection circuit for detecting image motion, comprising a one frame period difference detection means for detecting a one frame period difference between successive two frames of a video signal input thereto,
an N-frame period difference detection means for detecting a difference between current frame and a frame (N-1) frames before the current frame in the video signal wherein N is an integer,
a first contour detection means for detecting contours in the current frame of the video signal,
a second contour detection means for detecting contours in a frame N frames before the current frame of the video signal,
a band limiting means for limiting high band frequency components of an output signal from said one frame period difference detection means,
a first conversion means for converting an output signal from said band limiting means to a first motion signal according to an output signal from said first contour detection means,
a second conversion means for converting an output signal from said N-frame period difference detection means to a second motion signal according to an output signal from said first contour detection means,
a motion signal control means for controlling an output of the second motion signal according to the output signals from said first and second contour detection means,
and an output means for outputting a motion signal based on the first motion signal and an output signal of said motion signal control means.

2. The motion detection circuit according to Claim 1 wherein the value of N is an even integer greater than or equal to two.

3. The motion detection circuit for detecting image motion, comprising a one frame period difference detection means for detecting a one frame period difference between successive two frames of a video signal input thereto,
an N-frame period difference detection means for detecting a difference between current frame and a frame (N-1) frames before the current frame in the video signal wherein N is an integer,
a first contour detection means for detecting contours in the current frame of the video signal,
a second contour detection means for detecting contours in a frame N frames before the current frame of the video signal,
a band limiting means for limiting high band frequency components of an output signal from said one frame period difference detection means,
a first conversion means for converting an output signal from said band limiting means to a first motion signal according to an output signal from said first contour detection means,
a second conversion means for converting an output signal from said N-frame period difference detection means to a second motion signal according to the output signal from said first contour detection means,
an evaluation means for determining an area in which only the contour of the frame N-frames before the current frame occur based on output signals from said first and second contour detection means,
an output control means for controlling an output of said second conversion means according to the evaluation result obtained by said evaluation means,
and a selection means for selecting the larger of the first motion signal and an output signal from said output control means.

4. The motion detection circuit according to Claim 3 wherein the value of N is an even integer greater than or equal to two.

5. The motion detection circuit according to Claim 3 wherein said output control means is a cut-off means for cutting off the second motion signal in areas in which only the contours of the frame N-frames before the current frame are detected.

6. The motion detection circuit according to Claim 3 further comprising an expansion means for expanding the meaningful area of the evaluation result from said evaluation means, and characterized by controlling said output control means according to the output signal from the expansion means.

7. The motion detection circuit according to Claim 3 further comprising an isolated point removal means for removing independently occurring results in the evaluation result from said evaluation means,
and an expansion means for expanding the meaningful area of the evaluation result from which isolated points have been removed, therein said output control means is controlled according to the output signal from said expansion means.

8. The motion detection circuit according to Claim 3 wherein said evaluation means comprises a first comparator for comparing the absolute value of the output signal from said first detection means with a predetermined threshold value,
a second comparator for comparing the absolute value of the output signal from said second detection means with a predetermined second threshold value,
an exclusive-OR circuit to which are input the comparison results of the first and second comparators, and
an AND circuit operating on the output signal from said exclusive-OR circuit and said second comparator.

9. A motion detection circuit for detecting image motion and comprising a one frame period difference detection means for detecting a one frame period difference between successive two frames of a video signal input thereto,
an N-frame period difference detection means for detecting a difference between current frame and a frame (N-1) frames before the current frame in the video signal wherein N is an integer,
a first contour detection means for detecting contours in the current frame of the video signal,
a second contour detection means for detecting contours in a frame N frames before the current frame of the video signal,
a first band limiting means for limiting high band frequency components of an output signal from said one frame period difference detection means,
a second band limiting means for limiting high band frequency components of an output signal from said one frame period difference detection means,
a first conversion means for converting an output signal from said first band limiting means to a first motion signal according to an output signal from said first detection means,
a second conversion means for converting an output signal from said second band limiting means to a second motion signal according to an output signal from said first detection means,
a third conversion means for converting an output signal from said N-frame period difference detection means to a third motion signal according to the output signal from said first contour detection means,
a motion signal control means for controlling an output of said third conversion means signal according to the absolute value of the output signal from said first contour detection means and the output signal from said second contour detection means,
and an output means for outputting a motion signal based on the first and second motion signals and the output signal of said motion signal control means.

10. The motion detection circuit according to Claim 9 wherein the value of N is an even integer greater than or equal to two.

11. The motion detection circuit according to Claim 9 wherein a low frequency pass band of said second band limiting means is broader than a low frequency pass band of said first band limiting means.

12. A motion detection circuit for detecting image motion, comprising a one frame period difference detection means for detecting a one frame period difference between successive two frames of a video signal input thereto,
an N-frame period difference detection means for detecting a difference between current frame and a frame (N-1) frames before the current frame in the video signal wherein N is an integer,
a first contour detection means for detecting contours in the current frame of the video signal,
a second contour detection means for detecting contours in a frame N frames before the current frame of the video signal,
a first band limiting means for limiting high band frequency components of an output signal from said one frame period difference detection means,
a second band limiting means for limiting high band frequency components of an output signal from said one frame period difference detection means,
a first conversion means for converting an output signal from said first band limiting means to a first motion signal according to the output signal from the first detection means,
a second conversion means for converting an output signal from the second band limiting means to a second motion signal according to an output signal from said first contour detection means,
a third conversion means for converting an output signal from said N-frame period difference detection means to a third motion signal according to an output signal from said first contour detection means,
an evaluation means for determining an area in which only the contour of the frame N-frames before the current frame occur based on the output signals from said first and second contour detection means,
an output control means for controlling an output of said third conversion means according to the evaluation result obtained by said evaluation means,
and an output means for selecting and outputting a median value of the first motion signal, the second motion signal, and an output signal of said output control means.

13. The motion detection circuit according to Claim 12 wherein the value of N is an even integer greater than or equal to two.

14. The motion detection circuit according to Claim 12 wherein the low frequency pass band of said second band limiting means is broader than the low frequency pass band of said first band limiting means.

15. The motion detection circuit according to Claim 12 wherein said output control means is a cut-off means for cutting off the third motion signal in areas in which only the contour of the frame N-frames before the current frame are detected.

16. The motion detection circuit according to Claim 12 further comprising an expansion means for expanding the meaningful area of the evaluation result from said evaluation means, wherein said output control means is controlled according to the output signal from the expansion means.

17. The motion detection circuit according to Claim 12 further comprising an isolated point removal means for removing independently occurring results in the evaluation result from said evaluation means, and an expansion means for expanding the meaningful area of the evaluation result from which isolated points have been removed, wherein said output control means according to an output signal from said expansion means.

18. The motion detection circuit according to Claim 12 wherein the evaluation means comprises a first comparator for comparing the absolute value of the output signal from said first contour detection means with a predetermined threshold value,
a second comparator for comparing the absolute value of the output signal from said second contour detection means with a predetermined second threshold value,
an exclusive-OR circuit to which are input the comparison results of the first and second comparators,
and an AND circuit operating on output signals from said exclusive-OR circuit and said second comparator.
